# EUROPEAN PATENT SPECIFICATION

(11) **EP 2 857 234 B1**
(45) Date of publication and mention of the grant of the patent: **13.07.2016**
(21) Application number: 13186969.5
(22) Date of filing: 01.10.2013
(51) Int. Cl.: B60G 7/00

(54) **stabilizer link rod**
Verbindungsglied für einen Stabilisatorstab
Bras de liaison d'une barre stabilisatrice

(43) Date of publication of application: 08.04.2015
(73) Proprietor: Calvo Calleja, Gonzalo Florencio, 15009 La Coruna (ES)
(72) Inventor: Calvo Calleja, Gonzalo Florencio, 15009 La Coruna (ES)
(74) Representative: Munoz Garcia, Antonio

(56) References cited:
- WO-A1-02/053396
- US-A1- 2003 122 339
- US-A1- 2007 201 945

## Description

The present invention relates to a stabilizer link rod for a vehicle suspension applicable in the scope of the automobile component industry.

### Background of the Invention

Automotive vehicle suspension systems include stabilizer bars which are attached to the suspension of each wheel by means of stabilizer link rods. These stabilizer link rods are usually formed by a longitudinal element incorporating end elements at its ends for housing articulations. These articulations are usually spherical or elastic articulations.

As mentioned, the stabilizer link rod is a part attaching the stabilizer bar with the suspension of each wheel. Stabilizer link rods are essential in the kinematic chain of the automotive vehicle anti-roll system. The stresses generated in vehicle suspension due to body roll are transmitted through the stabilizing link rods to the stabilizer bar, generating an opposite turning moment, such that vehicle curve stability increases.

The stabilizer link rod is formed at the ends by two articulations and a central attachment element. These articulations can be spherical or elastic articulations. When assembled in a vehicle, one of the articulations is attached to the stabilizer bar and the other articulation is attached to the automotive vehicle suspension, for example, in a McPherson type suspension it will be bound to the vehicle damper.

The central attachment element of stabilizer link rods is usually made of metal, polymer or of a combination of both alternatives. The polymeric material may or may not be reinforced. This central element has at the ends two kinematic points of the vehicle suspension which will be the centers of rotation of the articulations positioned therein.

If the articulations are spherical articulations, they usually incorporate a friction bearing between the sphere of the bolt and the central attachment body. This friction bearing has several functions, namely, to assure smooth sphere rotational movement, to transfer stresses from the spherical bolt to the body of the stabilizer link rod and to position the center of the sphere in the kinematic point of the vehicle.

The function of the articulation is to generate the degrees of freedom required by the movement of the stabilizer link rod in its working form. If the articulation is a spherical articulation, there will be three degrees of freedom, the three possible rotations, and if the articulation is an elastic articulation, there will be 6 degrees of freedom in each articulation.

There are different types of stabilizer link rods on the market with different configurations depending on the specific application of the part. Regardless of the configuration, they have a series of requirements common to all of them which includes having a low production cost, weighing as little as possible, having a configuration that allows fast assembly and having rigidity suited to the needs of the vehicle in which the rod is assembled.

Metal link rods, polymeric link rods and hybrid link rods are distinguished among the material for manufacturing the central attachment element of stabilizer link rods. With regard to metal link rods, there are link rods that are made of steel and link rods made of light-weight alloys such as aluminum or magnesium.

Steel stabilizer link rods are characterized by their high weight, high manufacturing cost and the high material wastage due to the required machining processes. Furthermore, it will be necessary to protect the entire link rod against environmental agents to prevent it from corroding.

Such stabilizers were the first to appear on the market, the body has a solid central rod to which two metal casings that will house the articulation are welded at the ends. The rod is usually machined at its ends to reduce the section and thus facilitate welding with the casing. To insert the friction bearing and thus enable securing the position of the kinematic point, the inside of the bearing must be machined.

Metal stabilizer link rods manufactured from light-weight alloys, such as magnesium or aluminum for example, are characterized by a high manufacturing cost that greatly exceeds link rods manufactured from steel.

Likewise, there are stabilizer link rods such as that described in EP0832769A2, manufactured from polymeric materials which are characterized by having less weight and a lower cost than link rods manufactured from steel. However, these stabilizers made of polymeric materials require a greater work volume in the vehicle to achieve a rigidity that is equivalent to the steel link rod.

As result of combining the preceding designs, hybrid stabilizer link rods which are characterized by having a body with a metal and a polymeric portion, are obtained. Generally, the metal portion will be responsible for withstanding stresses, whereas the functions of the polymeric portion are to reinforce and to house the articulation.

The configuration of such link rods varies greatly, for example, WO2007009423A1 uses a solid central rod or tube the ends of which are injection molded, forming a polymer casing housing the articulation. The main problem of such stabilizer link rods is the attachment between the polymeric material and the metal material, which generates discontinuities in the stress transmission line, which involves a non-optimal way of working the part, being able to cause breakage. Furthermore, the option of a solid rod goes against reducing the weight of the link rod.

Another type of very common hybrid stabilizer link rod design solving the problem of discontinuities in the stress transmission line is the use of one or several metal sheets enclosing the articulation as a metal backbone, the area of the articulation thus being reinforced. EP0851131A2 and EP2502764A1 are a clear example of such design. The drawback of these solutions is the costly sheet forming process, in addition to the mechanical problems entailed by the possible relative movement between one sheet and another in EP2502764A1.

US 2007201945A1 discloses a coupling rod, more particularly for a stabilizer assembly in a motor vehicle, which comprises joints at its respective ends, wherein at least one of the joints of the coupling rod is an elastomer-metal joint which consists of an inner ball element an annular elastomer element and an outer sleeve part wherein the elastomer element is firmly connected to the ball element and to the sleeve part.

US 2003122339 A1 discloses a control arm includes a connection tube and two mounting eyes respectively attached to opposite ends of the tube. Each mounting eye has a sleeve and a rubber-metal element vulcanized into the sleeve.

WO 02053396 A1 discloses a ball joint assembly for pivotally interconnecting a first member and a second member includes a housing defining a cavity. The housing is adapted to be coupled to the first member. The ball joint also includes a ball stud having a ball segment retained in the cavity and a post segment adapted to be coupled to the second member. An elastomer is positioned within the cavity between the ball segment and the housing.

### Description of the Invention

The present invention relates to a hybrid stabilizer link rod, the function of which is to transmit the stresses generated in the vehicle suspension caused by body roll. The invention is defined in claim 1.

According to said claim 1, the stabilizer link rod for a vehicle suspension of the invention comprises a metal tube including at its ends attachment elements for housing articulations, and is characterized in that each attachment element comprises a metal ring welded directly on one of the ends of said metal tube and a polymer casing covering said metal ring, the end of said metal tube and the welding between said metal tube and said metal ring.

The dependent claims refer to the optional features of the stabilizer link rod according to the present invention.

According to a preferred embodiment of the present invention, each attachment element also comprises a friction bearing attached to said polymer casing, an articulation being housed in said friction bearing.

Said metal tube can preferably have a section that is constant along its entire length or a section that varies at its ends.

Furthermore, the longitudinal axis of said rings is preferably perpendicular with respect to the longitudinal axis of said metal tube, although it can also form an angle other than 90°.

It must also be indicated that the cross-section of said rings can be circular, elliptical, square, polygonal, D-shaped or in any suitable shape, and the cross-section of said metal tube is circular or polygonal, for example square or octagonal, or in any suitable shape.

The stabilizer link rod of the invention has several advantages:
Mechanical advantages: great weight savings is achieved, being comparable to a polymeric stabilizer.
Cost advantages: The manufacturing processes are simple, fast and inexpensive. Furthermore, since the welding is concealed by the polymer casing, the aesthetic requirements of said welding decrease, resulting in cost improvement due to savings in finishing operations.
Material savings advantages: no scrap is generated when making the central attachment element.
Modularity: it is possible to make different configurations with the same manufacturing tools.

A hybrid link rod comprising a central attachment element formed by a metal tube to which metal rings are welded on its ends is to be obtained with the stabilizer link rod object of the invention. A polymer is injection molded on said ends of the central attachment element and on said metal rings. A hybrid link rod taking up less volume than conventional link rods but having high rigidity and strength while at the same time minimizing material and weight is thus obtained, giving it improved mechanical properties.

The invention is an optimal solution given that an intermediate design between a stabilizer link rod with a metal body having a greater weight, and a stabilizer with a polymeric body having a lower volume is achieved.

Furthermore, it must be highlighted that compared to a stabilizer link rod manufactured from light-weight alloys under the same weight and volume conditions, in the case of the invention the cost is lower and the mechanical capacity higher.

Furthermore, when compared to another type of hybrid stabilizer link rods, the object of the invention is a great improvement in terms of cost, because the manufacturing process is much simpler as it does not require operations as complex as in the solutions in EP0851131A2 and EP2502764A1, for example.

### Brief Description of the Drawings

To better understand the foregoing a set of drawings is attached in which a practical embodiment has been schematically depicted as a non-limiting example.

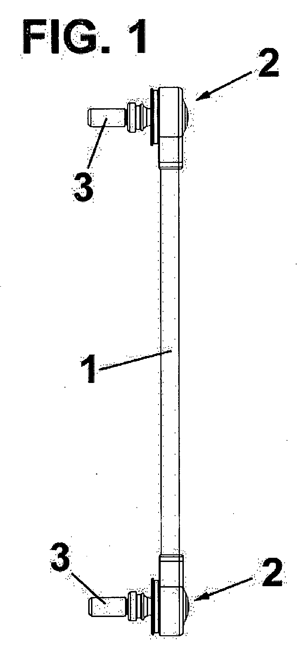

Figure 1 is a side view of a stabilizer link rod according to the present invention;

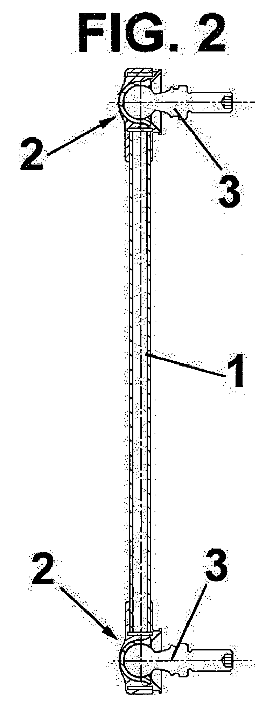

Figure 2 is a side cross-section view of a stabilizer link rod according to the present invention;

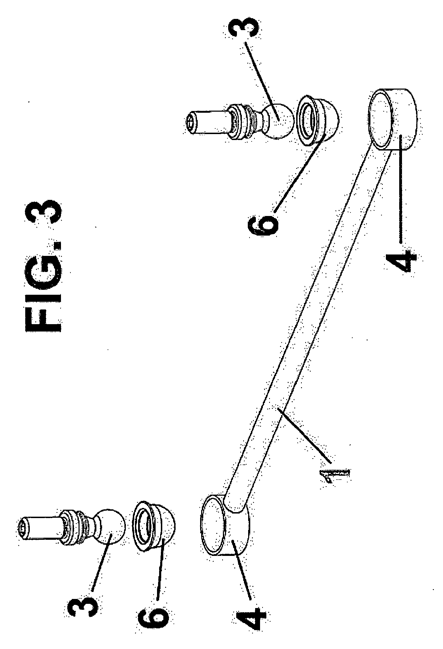

Figure 3 is an exploded perspective view of a stabilizer link rod according to the present invention;
Figure 4 is a cross-section detail of an attachment element of the stabilizer link rod according to the present invention; and
Figure 5 is a perspective view of a metal tube with its rings welded according to an alternative embodiment of the stabilizer link rod according to the present invention.

### Description of a Preferred Embodiment

The stabilizer link rod according to the present invention comprises a metal tube 1, comprising an attachment element 2 at each end where articulations 3 are housed.

The function of the attachment element 2 of this hybrid stabilizer link rod is to attach the articulations 3 located at its ends and transmit the stresses from one articulation 3 to another.

As described above in the background of the invention, a stabilizer link rod must meet the requirements of having a low production cost, weighing as little as possible, having a configuration that allows fast assembly and having rigidity suited to the needs of the vehicle in which it is assembled.

Each attachment element 2 comprises a metal ring 4 which is welded directly on one end of said metal tube 1 and a polymer casing 5 completely surrounding said metal ring 4 and the end of said metal tube 1.

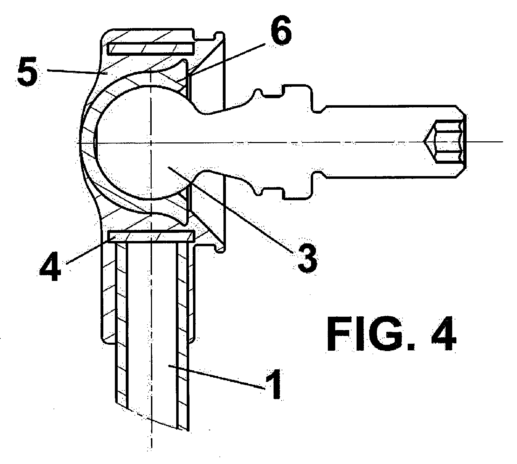

Furthermore, each attachment element 2 also comprises a friction bearing 6 in which said articulation is housed. As can be seen in Figure 4, said friction bearing 6 is attached to said polymer casing 5, such that said casing 5 also surrounds said friction bearing 6, except the portion where the articulation 3 is housed.

The present invention therefore considers a hybrid attachment element, having a metal tube 1 as a stress transmission element and casings 5 made of polymeric material that are injection molded thereon for housing the articulations 3 of the ends.

The two metal rings 4 welded on the ends of the metal tube 1 will reinforce the housing of the articulation 3, giving it robustness in that area. The metal tube 1 preferably has a section that is constant along its entire length, but there are designs in which the section at the ends of said tube is varied to facilitate welding with the rings 4.

The articulations 3 that will be positioned inside both rings 4 can have axes parallel to one another or forming an angle. This is easily achieved in the process of welding both rings 4 with the metal tube 1, welding both rings 4 with the angle required for each configuration of the link rod.

The casings 5 are then injected on the end of the metal tube 1, such that the attachment elements 2 for housing articulations 3 are formed, the articulation 3 positioned inside the ring 4 being able to be injection molded at the same time or introduced after the injection molding. This injection molding can completely or partially cover the ends of the metal tube 1, such that the aesthetic requirements of the area with the welding are much lower than in the stabilizer link rods known today.

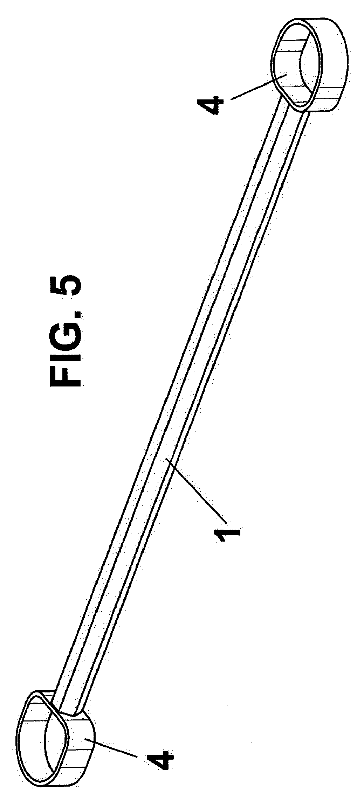

Figure 5 depicts an alternative embodiment of the assembly of the metal tube 1 and the metal rings 4.

In this embodiment, the cross-section of the metal tube 1 is hexagonal, although it must be indicated that the cross-section can be of any suitable shape, for example, circular, square, etc. Furthermore, in this embodiment the metal rings 4 are not circular, but rather D-shaped, facilitating the welding thereof to the ends of the metal tube 1.

Despite having made reference to a specific embodiment of the invention, it is evident for a person skilled in the art that the described stabilizer link rod can be subjected to a number of variations and modifications, and that all the mentioned details can be replaced with other technically equivalent details without departing from the scope of protection defined by the attached claims.

## Claims

1. Stabilizer link rod for a vehicle suspension, comprising a metal tube (1) including at its ends attachment elements (2) for housing articulations (3), each attachment element (2) comprising a metal ring (4) welded directly on one of the ends of said metal tube (1), **characterized in that** it also comprises a polymer casing (5) covering said metal ring (4), the end of said metal tube (1) and the welding between the metal tube (1) and the metal ring (4).

2. Stabilizer link rod for a vehicle suspension according to claim 1, wherein each attachment element (2) also comprises a friction bearing (6) attached to said polymer casing (5), an articulation (3) being housed in said friction bearing (6).

3. Stabilizer link rod for a vehicle suspension according to claim 1, wherein said metal tube (1) has a section that is constant along its entire length or varies at its ends.

4. Stabilizer link rod for a vehicle suspension according to claim 1, wherein the longitudinal axes of said rings (4) are parallel to one another or form an angle other than 0°.

5. Stabilizer link rod for a vehicle suspension according to claim 1, wherein the cross-section of said rings (4) is circular, elliptical, square, polygonal or D-shaped.

6. Stabilizer link rod for a vehicle suspension according to claim 1, wherein the cross-section of said metal tube (1) is circular or polygonal.

## Patentansprüche

1. Pendelstütze für eine Fahrzeugaufhängung, aufweisend ein Metallrohr (1) und an dessen Enden Befestigungselemente (2) zur Aufnahme von Gelenken (3), wobei jedes Befestigungselement (2) einen, direkt mit einem der Enden des Metallrohrs (1) verschweissten, Metallring (4) aufweist, **dadurch gekennzeichnet, dass** es auch ein Polymergehäuse (5) aufweist, welches den Metallring (4), das Ende des Metallrohres (1) und die Verschweißung zwischen dem Metallrohr (1) und dem Metallring (4) bedeckt.

2. Pendelstütze für eine Fahrzeugaufhängung nach Anspruch 1, wobei jedes Befestigungselement (2) auch ein, an das Polymergehäuse (5) angegliedertes, Gleitlager (6) aufweist, wobei in dem Gleitlager (6) ein Gelenk (3) angebracht ist.

3. Pendelstütze für eine Fahrzeugaufhängung nach Anspruch 1, wobei das Metallrohr (1) einen Querschnitt aufweist, der entlang dessen gesamter Länge konstant ist oder an dessen Enden variiert.

4. Pendelstütze für eine Fahrzeugaufhängung nach Anspruch 1, wobei die Längsachsen der Ringe (4) parallel zueinander sind oder einen anderen Winkel als 0° bilden.

5. Pendelstütze für eine Fahrzeugaufhängung nach Anspruch 1, wobei der Querschnitt der Ringe (4) kreisförmig, elliptisch, quadratisch, polygonal oder D-förmig ist.

6. Pendelstütze für eine Fahrzeugaufhängung nach Anspruch 1, wobei der Querschnitt des Metallrohres (1) kreisförmig oder polygonal ist.

## Revendications

1. Bielle de liaison stabilisatrice pour une suspension de véhicule, comprenant un tube métallique (1) incluant à ses extrémités des éléments de fixation (2) pour loger des articulations (3), chaque élément de fixation (2) comprenant une bague métallique (4) soudée directement sur une des extrémités dudit tube métallique (1), **caractérisée en ce qu'**elle comprend également un carter polymère (5) couvrant ladite bague métallique (4), l'extrémité dudit tube métallique (1) et le soudage entre le tube métallique (1) et la bague métallique (4).

2. Bielle de liaison stabilisatrice pour une suspension de véhicule selon la revendication 1, dans laquelle chaque élément de fixation (2) comprend également un palier à friction (6) fixé audit carter polymère (5), une articulation (3) étant logée dans ledit palier à friction (6).

3. Bielle de liaison stabilisatrice pour une suspension de véhicule selon la revendication 1, dans laquelle ledit tube métallique (1) possède une section qui est constante sur sa longueur entière ou varie à ses extrémités.

4. Bielle de liaison stabilisatrice pour une suspension de véhicule selon la revendication 1, dans laquelle les axes longitudinaux desdites bagues (4) sont parallèles l'un à l'autre ou forment un angle autre que 0°.

5. Bielle de liaison stabilisatrice pour une suspension de véhicule selon la revendication 1, dans laquelle la section transversale desdites bagues (4) est circulaire, elliptique, carrée, polygonale ou en forme de D.

6. Bielle de liaison stabilisatrice pour une suspension de véhicule selon la revendication 1, dans laquelle la section transversale dudit tube métallique (1) est circulaire ou polygonale.
